# EUROPEAN PATENT APPLICATION

(11) **EP 2 012 153 A1**
(43) Date of publication of application: **07.01.2009**
(21) Application number: 07112006.7
(22) Date of filing: 06.07.2007
(51) Int. Cl.: G02B 6/38

(54) **Optical fibre ferrule assembly**

(71) Applicant: Ridgemount Technologies Limited, Launton Bicester Oxfordshire OX26 5EL (GB)
(72) Inventor: Limbert, Mark John, Towcester, Northamptonshire NN12 7AB (GB); Peters, Christopher Russell, Thame, Oxfordshire OX9 3YJ (GB)

(57) **Abstract**

An Optical Fibre Ferrule Assembly 1 which comprising an inner tube member 8, optical ferrule 6 and outer tube member 3.

The inner tube member 8 has generally cylindrical form with either a singular or plurality of key features 9 at one end and at the other end a counter bore for the location and captivation of the optical ferrule member 6. The key feature 9 provides a datum plane for location and orientation when processing the inner tube sub assembly 2 to ensure end face angle 7 on the optical ferrule member 6 is correctly orientated. The inner tube sub assembly 2 is of precise length such that when mounted into the outer tube member 3 the rear shoulder 10 of the inner tube member 8 abuts the internal shoulder 13 of the outer tube member 3. The location of the rear shoulder 10 with the internal shoulder 13 ensures the precise dimensional and functional relationship is maintained between the external datum plane 17 on the outer tube assembly and the optical end face datum 7 on the optical ferrule member 6.

The inner tube sub assembly 2 is of sufficient size, dimension and form small enough to enable it to pass freely though the micro duct member 5 when the micro duct member is both straight and formed up to its minimum bend radius.

The outer tube member 3 has generally cylindrical form with a minimum of four alignment and orientation features of either a singular or plurality form.
A singular or plurality of internal key features 12 which pass though the full length of the outer tube member 3 to enable precise alignment and orientation to the key feature 9 on the inner tube member 8.
A singular or plurality of external key datum features 15 which permit precise orientation and alignment when the Optical Fibre Ferrule Assembly is connected in use.
An internal shoulder 13 against which the rear shoulder 10 of the inner tube member 8 abuts to ensure precise dimensional and functional relationship is maintained between the external datum feature 17 of the outer tube member 3 and the optical end face 7 on the ferrule member is maintained.

## Description

As optical networks and network infrastructures develop and both active and dark fibre reaches further into the network effective solutions are required to permit efficient installation or activation of fibre at minimum cost. Current solution to the fibre installation issue is the use of micro tubes where on demand fibre can be blown through the tubes to the required destination. In the current system to enable connection it is necessary when the fibre exits the tube to perform either fibre splicing to a connectorised fibre assembly, or to terminate the emerging fibre onto a connector. Both of these traditional options require skilled labour and specialist equipment.

The invention relates to an Optical Fibre Ferrule Assembly which comprises a plurality of parts where one sub assembly part can be secured (pre-terminated) to an optical fibre at the manufacturing facility and polished to the appropriate end face standard and optical geometry. This pre-terminated sub assembly part can then either be pulled, fed or blown through the tube or micro tube where upon exiting the tube the additional component part of the Optical Fibre Ferrule Assembly can be orientated to the desired position and with simple tooling and secured into place to form the finished Optical Fibre Ferrule Assembly. The completed Optical Fibre Ferrule Assembly can then be used either within a connector or direct to the equipment.

According to an aspect of the invention there is provided an Optical Fibre Ferrule Assembly comprising:
a metallic or polymer inner tube member which into one end is secured either a ceramic, metal or polymer precision optical ferrule and in the other end is a counter bore of internal diameter suitable for the entry of an optical fibre. At this end of the inner tube member is a singular or plurality of key slot features to permit orientation to features on the precision optical ferrule. The outer diameter of the inner tube is of a sufficiently small enough diameter to enable free passage through all fibre micro duct tubing.
a metallic or polymer outer tube member where in one end is a precision counter-bore of comparable size and depth to match the inner tube member, and at the other end a bore of comparable clearance size to accommodate the optical fibre. Along one section of the outer tube member is an axial slot of comparable clearance size to accommodate the optical fibre and to enable the outer tube member to be orientated and fitted to the inner tube member such that the axial slot of the outer tube member is coincident with the slot feature of the inner tube member.

The fully assembled Optical Fibre Ferrule Assembly shall have a form and function identical to existing standard ferrules to enable intermateability and interchangeability, or a unique form to suit custom applications.

Embodiments of the invention will now be described by way of example only, with reference to the accompanying diagrams, in which:
Figure 1 is a diagrammatic view of the fully assembled Optical Fibre Ferrule Assembly on a fibre which has exited the micro tube according to the first embodiment of the invention.
Figure 2 is a diagrammatic view of the inner tube member sub assembly according to the first embodiment of the invention.
Figure 3 is a diagrammatic view of the outer tube member according to the first embodiment of the invention.
Figure 4 is a diagrammatic illustration of the inner tube member sub assembly entering the micro tube and showing the outer tube member at the exit position of the micro-tube.
Figure 5 is a diagrammatic illustration of the inner tube member assembly exiting the micro tube such that the outer tube can be fitted to the inner tube member assembly.
Figure 6 is a diagrammatic view of the fully assembled Optical Fibre Ferrule Assembly on a fibre which has exited the micro tube according to the first embodiment of the invention.
Figure 6a is a diagrammatic view of the fully assembled Optical Fibre Ferrule Assembly on a fibre where the ferrule end face is of angle orientation.
Figure 6b is a diagrammatic view of the fully assembled Optical Fibre Ferrule Assembly on a fibre where the ferrule end face is of symmetrical orientation.

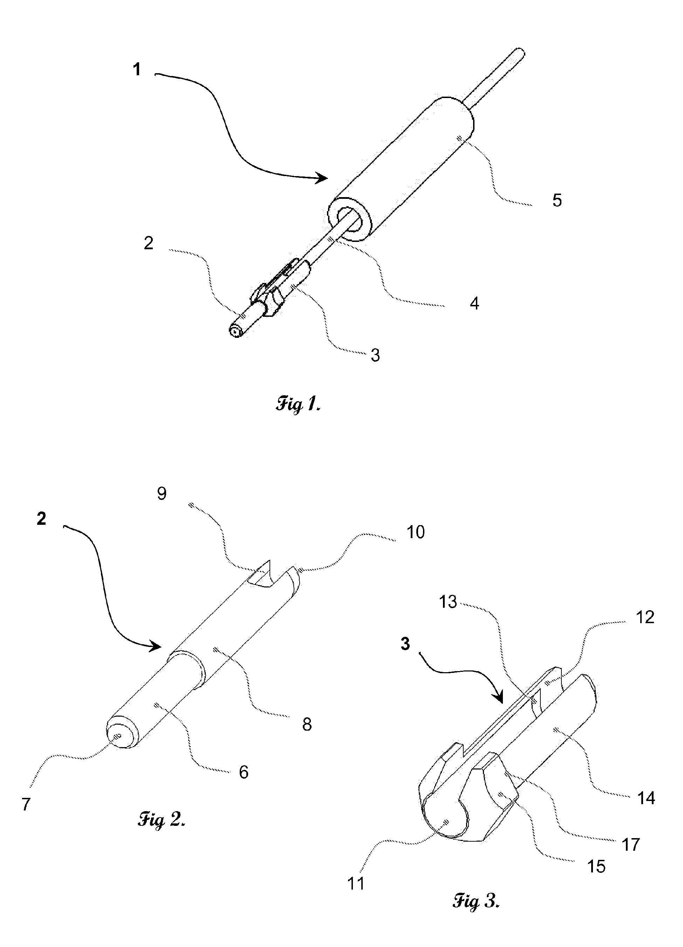

Referring to Figure 1, a first embodiment of the invention provides an Optical Fibre Ferrule Assembly comprising an inner tube sub assembly 2 and outer tube member 3 where the inner tube sub assembly 2 has been fitted to an optical fibre 4, passed through a micro tube 5 and been fitted with the outer tube member 3.

Referring to Figure 2, the inner tube assembly 2 has a metallic or polymer member 8 of generally cylindrical form with either a singular or plurality of key features 9 which are orientated to the angle end face 7 of the optical ferrule. The inner tube assembly 2 has at one end either a metallic, ceramic or polymer optical ferrule 6 inserted.

Referring to Figure 3, the outer ferrule member 3 of either a metallic or polymer material of generally cylindrical form 14 with either a singular or plurality of orientation features 15 at one end. At one end is a counterbore 11 of internal diameter to locate and secure the inner tube member 8 such that the inner tube member key feature 9 is orientated coincident with the outer tube member axial slot feature 12 and the end of the inner tube member 10 abuts the internal counterbore shoulder 13 of the outer ferrule member 3.

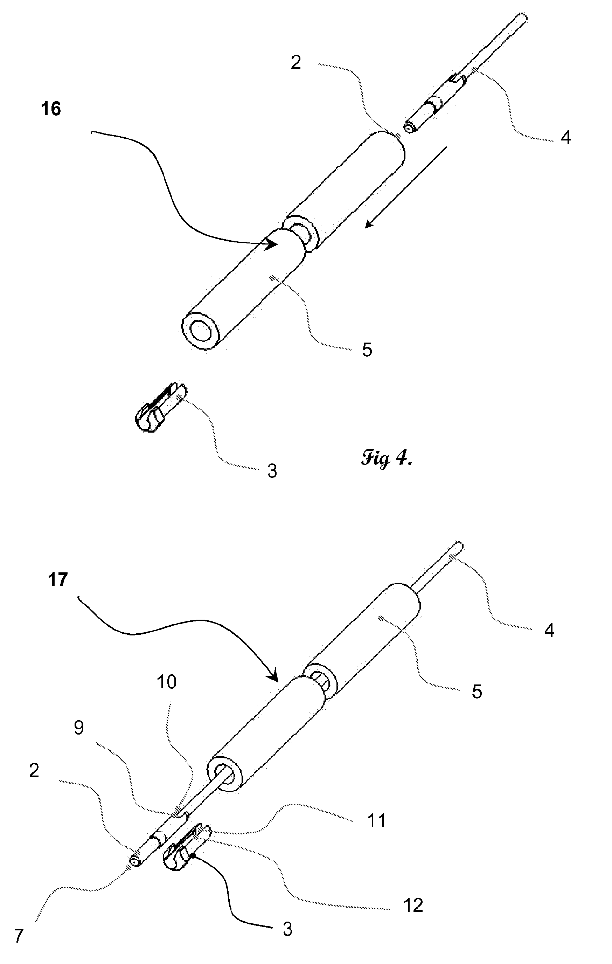

Referring to Figure 4, the inner tube assembly 2 terminated onto the fibre 4 is fed into and passed through the micro tube 5

Referring to Figure 5, the inner tube assembly 2 terminated onto the fibre 4 exits the micro tube 5.

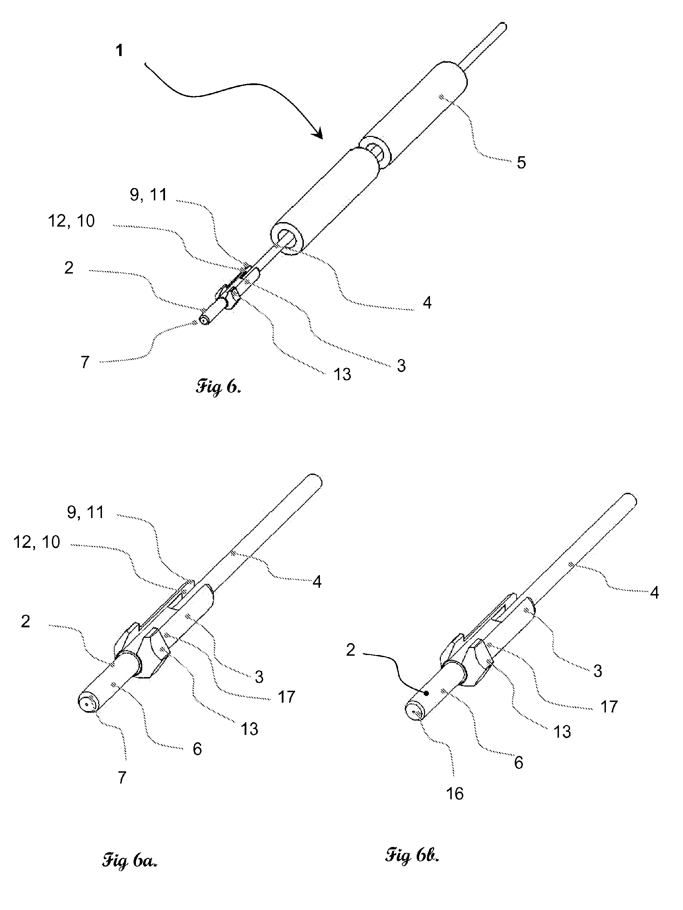

Referring to Figures 6, 6a & 6b, the outer tube member 3 is fitted to the inner tube assembly 2 such that the key feature 9 of the inner tube member 8 is orientated coincident with the axial slot feature 12 of the outer tube member 3 such that the rear shoulder 10 of the inner tube member 8 abuts the counterbore shoulder 13 of the outer tube member 3. The orientation alignment ensures the ferrule end face angle 7 is correctly orientated to the outer ferrule member 3 key features 13 and the dimensional and functional relationship between the external datum 17 on the outer tube member 17 and the ferrule end face 7 of the optical ferrule 6 is maintained.
In the case of figure 6b the ferrule end face 16 is of symmetrical form but can still be orientated to the one of the plurality of key features 13 on the outer ferrule member 3 to ensure optimum optical performance or offset.

## Claims

1. An Optical Fibre Ferrule Assembly comprising:
An inner optical fibre ferrule of a diameter and length which is of a size and ratio to enable the optical ferrule assembly, when fitted to the optical fibre, to be passed through installation tubes or micro tubes over distances of up to, and exceeding 300m. The inner optical fibre ferrule assembly shall pass freely through the tubes when the tubes are both straight and or formed to their specified minimum bend radius such that the inner optical fibre ferrule assembly emerges unhindered from the end of the tube. Upon exiting the tube the larger outer optical fibre ferrule component is fitted onto the inner optical fibre ferrule to complete the Optical Fibre Ferrule Assembly such that the completed Optical Fibre Ferrule Assembly can then be fitted to an optical connector or receptacle without detriment to the functionality of the optical connector or optical receptacle.
An outer optical fibre component with corresponding external features and form to suit assembly into optical connectors and or receptacles, and with an internal features of corresponding shape to the inner optical fibre ferrule assembly to enable location, positioning, orientation and clamping of the inner optical fibre assembly such that the completed outer and inner optical fibre assembly is intermateable and interchangeable with equivalent one piece optical fibre ferrule assemblies ensure all datum reference planes are maintained.
An optical fibre ferrule assembly comprising an inner optical fibre ferrule which incorporates a singular or plurality of key features which enable orientation alignment when fitted into the outer optical fibre ferrule.
An outer optical fibre ferrule which comprises a singular or plurality of key features which enable orientation, alignment, positioning, and clamping of the outer optical fibre ferrule when fitted onto the inner optical fibre ferrule.
An Optical Fibre Ferrule Assembly which comprises of two or more parts of which one, the inner tube sub assembly, will be fitted to an optical fibre and passed through a micro tube and upon exiting the micro tube the Outer Optical Fibre Ferrule component can be securely fitted to the Optical Fibre to form an Optical Fibre Ferrule Assembly of corresponding form and function of that of a standard one piece ferrule interface for use in optical connectors and/or optical connectors.

2. An Optical Fibre Ferrule Assembly as claimed in claim 1 wherein the Optical Fibre Ferrule Assembly component parts are of a metallic composition.

3. An Optical Fibre Ferrule Assembly as claimed in claim 1 wherein the Optical Fibre Ferrule Assembly component parts are of a plastic polymer composition.
An Optical Ferrule Assembly as claimed in claim 1 wherein the Optical Ferrule Assembly can be used in an optical ferrule retaining device to permit an optical ferrule assembly to be orientated and coupled to an optical receptacle.
